(19) Europäisches Patentamt

European Patent Office

Office européen des brevets

(11) Numéro de publication : **0 059 295 B1**

(12) **FASCICULE DE BREVET EUROPÉEN**

(45) Date de publication du fascicule du brevet :
30.01.85

(51) Int. Cl.⁴ : **G 01 L  1/22**

(21) Numéro de dépôt : **81810063.8**

(22) Date de dépôt : **26.02.81**

(54) **Cellule de mesure d'une force à effet radial.**

(43) Date de publication de la demande :
08.09.82 Bulletin 82/36

(45) Mention de la délivrance du brevet :
30.01.85 Bulletin 85/05

(84) Etats contractants désignés :
**AT BE CH DE FR GB IT LI NL SE**

(56) Documents cités :
**DE-A- 2 518 548
GB-A- 2 009 943
US-A- 3 365 689
US-A- 3 695 096
US-A- 3 949 603**

(73) Titulaire : **VIBRO-METER SA**
**Route de Moncor 4**
**CH-1700 Fribourg (CH)**

(72) Inventeur : **Loos, Horst-Rudolf, Dr.**
**Route de Moncor 13**
**CH-1752 Villars-sur-Glâne (CH)**

(74) Mandataire : **Steiner, Martin et al**
**c/o AMMANN PATENTANWAELTE AG BERN**
**Schwarztorstrasse 31**
**CH-3001 Bern (CH)**

Jouve, 18, rue St-Denis, 75001 Paris, France

## Description

La présente invention concerne une cellule pour la mesure d'une force à effet radial, ladite cellule étant susceptible de produire des signaux de sortie périodiques en fonction d'un déplacement périodique de ladite force autour de ladite cellule, comprenant au moins un système de capteurs réagissant aux contraintes produites par ladite force sur ladite cellule, lesdits capteurs étant disposés symétriquement dans deux plans faisant entre eux un angle déterminé.

Il est nécessaire, pour beaucoup de cas de la pratique, de pouvoir mesurer avec une certaine précision une force agissant radialement sur un axe. C'est le cas par exemple lors de la surveillance d'installations techniques, de machines opératrices, d'engins de levage, etc. Lorsqu'il est nécessaire de déterminer par exemple la force de traction dans un câble passant sur une poulie, il serait certainement très indiqué de pouvoir utiliser l'axe de la poulie comme un axe ou une cellule de mesure de la force.

Dans la pratique, la force à mesurer peut agir sous un angle constant ou variable par rapport à une direction déterminée qui est généralement choisie comme celle de la plus grande sensibilité et désignée par « direction de la charge ». Il est donc désirable que la cellule soit non seulement capable de déterminer la force de contrainte indépendamment de l'angle d'attaque de celle-ci, mais encore la composante variable de cette force dans la direction de charge.

Le brevet US 3 695 096 décrit une cellule de mesure de forme tubulaire, de section circulaire à l'intérieur de laquelle sont disposées des paires de jauges de contrainte selon deux plans perpendiculaires entre eux, lesdits plans étant inclinés respectivement de 45° par rapport à l'axe de la cellule. Celle-ci comporte à sa surface extérieure, vers ses extrémités, des zones de concentration de la force, de diamètre réduit, et les jauges de contrainte sont disposées dans le plan de ces zones ; elles réagissent en réponse aux contraintes de cisaillement. La cellule est susceptible de mesurer une force agissant radialement indépendamment de l'angle d'attaque ainsi que les composantes de cette force selon deux directions de charge ou de référence perpendiculaires entre elles.

On connaît encore par le brevet US 3 365 689 un disque élastique utilisé dans le même but que le dispositif précédent avec quatre perçages radiaux dans lesquels sont disposés les capteurs.

La demande DE-OS 25 18 548 décrit aussi une cellule de mesure de forme tubulaire de section circulaire dans laquelle les capteurs (jauges de contrainte) sont disposés sur des surfaces planes produites sur le manteau extérieur de la cellule.

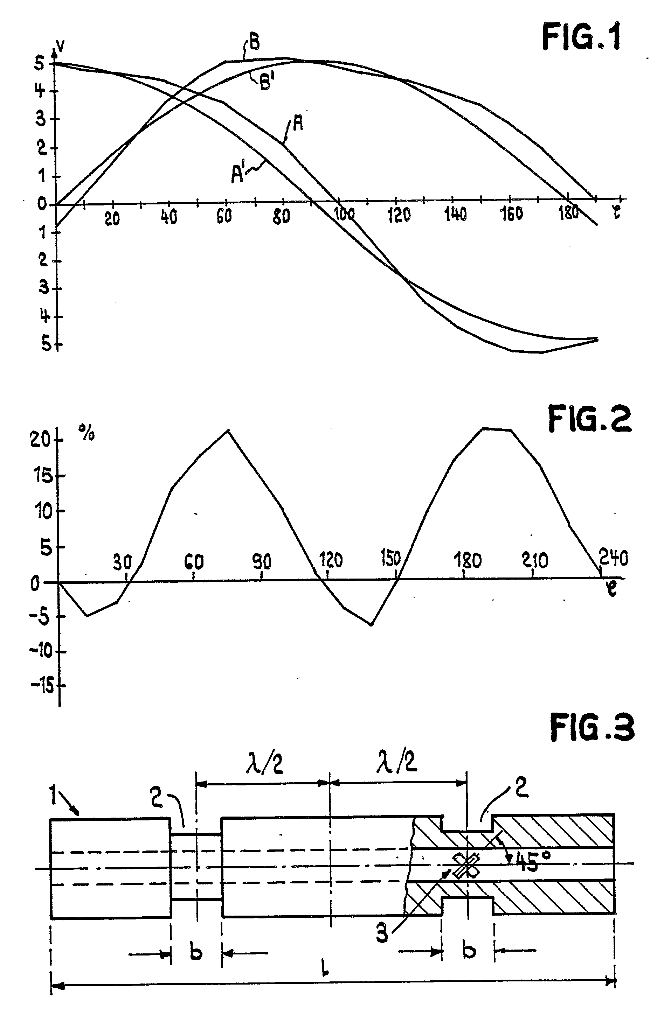

Il est cependant caractéristique qu'aucune des cellules de mesure connues de l'état de la technique n'est disponible sur le marché en tant qu'élément de mesure indépendant. Des essais effectués avec une cellule de mesure ayant une configuration similaire à celle décrite dans US 3 695 096 ont montré clairement que cette cellule n'est pas utilisable ni pour la mesure de la composante de la force radiale par rapport à une direction de charge ni pour la mesure de cette même force indépendamment de l'angle d'attaque, et ceci en raison de fortes erreurs de mesure, erreurs dues au principe même de l'utilisation de la cellule. Les résultats de mesure sont résumés dans les figures 1 et 2. La figure 1 montre les composantes $P \cos \Phi$ (A) et $P \sin \Phi$ (B), d'une force P agissant radialement sur la cellule de mesure, ces composantes étant mesurées par deux ponts de mesure comprenant des capteurs disposés dans deux plans perpendiculaires entre eux, les capteurs individuels étant connectés dans les ponts respectifs de manière à éliminer les composantes de cisaillement, de sorte que seules les composantes de flexion soient mesurées.

Il est immédiatement visible que les composantes mesurées en fonction de l'angle de rotation $\Phi$ présentent des écarts relativement importants, non admissibles en pratique, par rapport aux valeurs de consigne A', et B' sinusoïdales théoriques. Ces écarts peuvent s'expliquer par le fait que la cellule de mesure, reposant librement par chacune de ses extrémités sur un support, est chargée en son milieu par la force radiale P à mesurer. Cette disposition donne lieu à une distribution irrégulière des forces dans les différentes sections, produisant un aplatissement du sommet de la fonction sinusoïdale. Une analyse de Fourier montre la présence d'harmoniques impairs (3e, 5e, etc.).

La figure 2 montre la courbe d'erreurs exprimées en %, obtenue lors de la mesure de la grandeur de la force P. En principe, la grandeur de la force P mesurée devrait être pratiquement indépendante de l'angle de rotation $\Phi$. Il est cependant visible que tel n'est pas le cas, l'erreur de mesure variant entre + 21,5 % et − 6,5 % en fonction de cet angle. La figure 2 montre en outre clairement que la courbe d'erreur possède une période de 120°, correspondant à la présence d'un troisième harmonique, comme indiqué plus haut. Ceci rend la cellule totalement impropre à une utilisation pratique. L'invention se propose justement d'éliminer de telles erreurs de mesure, de manière à rendre la mesure de la grandeur de la force P pratiquement indépendante de l'angle de rotation, c'est-à-dire avec une erreur admissible pour les besoins de la pratique.

Partant de l'état de la technique et des résultats de mesure mentionnés ci-dessus, le but de la présente invention est de réaliser une cellule de forme tubulaire pour mesurer sans erreur significative pour la pratique et de manière reproductible a) la composante d'une force agissant radialement par rapport à une direction de référence prédéterminée, en fonction de l'angle de rotation de ladite force et b) la valeur absolue de la force, indépendamment de l'angle d'attaque de cette force.

Pour atteindre ce but, la cellule de mesure selon l'invention est caractérisée par le fait qu'une partie au moins desdits capteurs sont branchés dans un circuit permettant d'éliminer dans son signal de sortie des composantes de périodes plus courtes que la période fondamentale dudit déplacement.

L'invention va être décrite ci-après, à titre d'exemple et à l'aide du dessin dans lequel

La figure 1   montre les composantes d'une force agissant radialement sur une cellule de mesure selon l'état de la technique,

La figure 2   montre les erreurs de la grandeur d'une force agissant radialement mesurée par une cellule de mesure selon l'état de la technique,

La figure 3   est une représentation schématique d'une cellule de mesure selon l'invention,

La figure 4   montre la force et l'angle d'attaque de cette force sur la cellule,

La figure 5   montre les conditions de charge d'une cellule de mesure tubulaire,

La figure 6   montre un modèle phénoménologique de la cellule de mesure,

La figure 7   montre les conditions dans une poutre dans le cas de la flexion pure,

La figure 8   montre les grandeurs géométriques associées à la poutre de la figure 7,

La figure 9   montre la forme de la composante de flexion dans le cas d'une cellule de mesure de forme tubulaire,

La figure 10   montre la forme de la composante de flexion dans le cas d'une cellule de mesure de section circulaire,

La figure 11   montre une cellule de mesure avec une disposition des capteurs permettant l'élimination d'un troisième harmonique,

La figure 12   montre la répartition des capteurs de la figure 11 selon deux plans à inclinaison relative,

La figure 13   montre le branchement des capteurs de la figure 11,

La figure 14   montre le signal de sortie d'une cellule de mesure sans compensation du 3$^e$ harmonique,

La figure 15   montre le signal de sortie d'une cellule de mesure avec compensation du 3$^e$ harmonique,

La figure 16   est la courbe d'erreur de la grandeur d'une force agissant radialement sur une cellule de mesure avec compensation du 3$^e$ harmonique,

La figure 17   montre le schéma d'un circuit de mesure de la force agissant radialement sur la cellule de mesure et utilisant les contraintes de flexion,

La figure 18   montre les conditions dans une poutre dans le cas de contraintes de cisaillement pur,

La figure 19   illustre la preuve expérimentale de la composante de cisaillement,

La figure 20   montre les courbes des variations de résistance des capteurs d'une cellule soumise à une force radiale,

La figure 21   montre la disposition des capteurs dans la cellule permettant la mesure des composantes de flexion et de cisaillement,

La figure 22   montre les courbes de la composante de flexion et de la composante de cisaillement obtenues par simulation à l'aide d'un ordinateur, à partir des variations de résistance mesurées des capteurs,

La figure 23   montre le branchement en pont des capteurs de la figure 21, permettant d'éliminer les effets de la composante de cisaillement lors de la mesure de la composante de flexion,

La figure 24   montre le branchement en pont des capteurs de la figure 21, permettant d'éliminer les effets de la composante de flexion lors de la mesure de la composante de cisaillement,

La figure 25   montre la disposition des capteurs dans une poutre encastrée d'un côté pour la mesure de la grandeur de la force radiale,

La figure 26   montre le circuit électronique permettant la mesure de la grandeur de la force radiale indépendamment de l'angle d'attaque,

La figure 27   montre une cellule de mesure avec une disposition des capteurs permettant d'éliminer la composante due aux contraintes de flexion, et

La figure 28   montre le branchement en pont des capteurs de la figure 27.

Par la suite, il sera fait une distinction entre la mesure de la force radiale à l'aide des contraintes de flexion et de caisaillement, ces dernières étant utilisées de préférence dans le cas où la cellule de mesure est en porte-à-faux, c'est-à-dire encastrée d'un seul côté.

Il est également important que la cellule de mesure soit de construction robuste, qu'elle puisse résister à de fortes sollicitations d'utilisation et que, dans la mesure du possible, sa configuration lui permette d'être montée après coup dans des structures déjà existantes sans nécessité de modifications importantes. Une configuration préférée est celle d'un axe creux à l'intérieur duquel les capteurs (jauges de contrainte) sont montés, de sorte qu'ils soient protégés de manière presque idéale contre les influences mécaniques extérieures. L'intérieur de la cellule peut aussi être fermé de manière étanche vis-à-vis de l'extérieur, ce qui permet à cette cellule de supporter des conditions d'environnement défavorables.

Les capteurs sont de préférence des jauges de contrainte (DMS, « Dehnungsmesskeifen » collées à la surface intérieure de la cellule tubulaire. On sait d'autre part que les jauges de contrainte délivrent des tensions variant linéairement en fonction de leur allongement.

La figure 3   montre une cellule de mesure selon l'invention, de forme tubulaire et de section circulaire. Cette cellule est de configuration similaire à celle de la cellule décrite dans US 3 695 096. La cellule 1 a la forme d'un cylindre creux de longueur 1 comportant deux zones de concentration 2 de la force de largeur b situées symétriquement à des distances λ/2 par rapport au centre de la cellule. Ces zones de concentration sont simplement des gorges tournées dans la masse, de diamètre plus petit que le diamètre extérieur de la cellule. A l'intérieur de la cellule, à l'endroit des gorges, sont disposées les jauges de contrainte 3. Dans beaucoup de modèles connus de cellules de mesure, les DMS sont disposés sous un angle de 45° par rapport à l'axe longitudinal de la cellule.

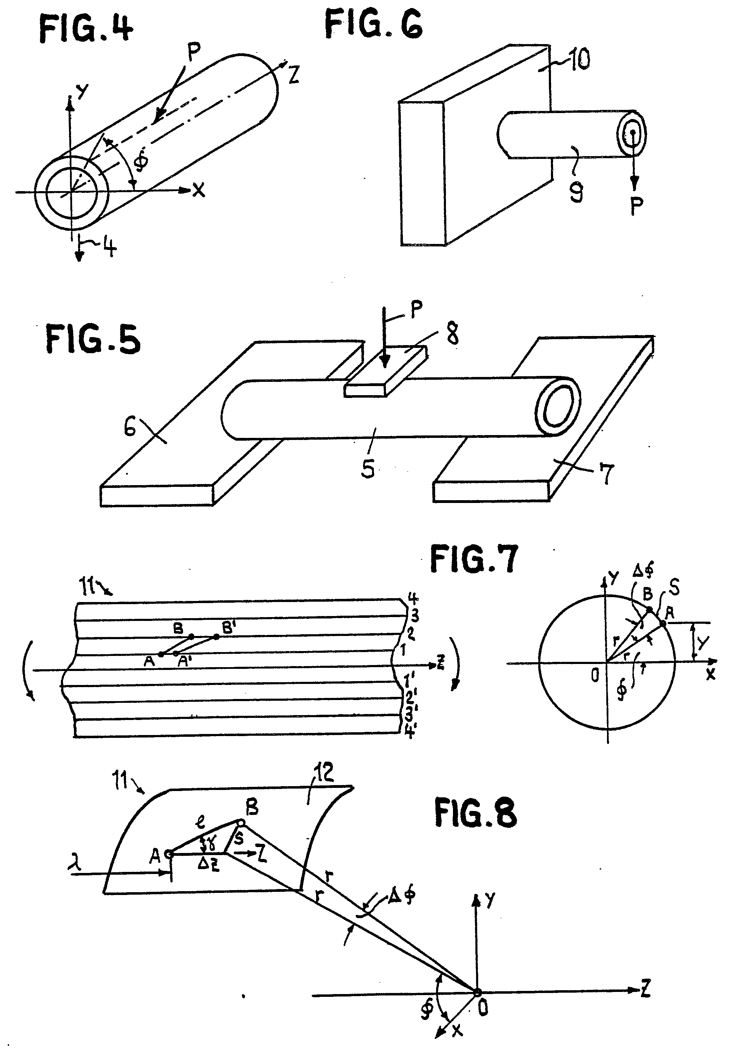

La figure 4 montre la force P et l'angle d'attaque de celle-ci sur la cellule. La direction de charge 4 est dirigée selon l'axe Y et la mesure des composantes Px et Py de la force à l'aide de deux systèmes de capteurs indépendants permet de déterminer la force P agissant radialement sur la cellule indépendamment de l'angle d'attaque $\Phi$, selon la relation

$$P = \sqrt{P_x^2 + P_y^2}$$

Examinons maintenant ce qui se passe dans la cellule de mesure à l'aide d'une théorie approximative dans laquelle les effets des forces de flexion et de cisaillement sont examinés séparément.

La figure 5 montre les conditions de charge d'une cellule de mesure tubulaire. La cellule est disposée entre deux supports 6 et 7 et la force P est appliquée entre les supports par l'intermédiaire d'une pièce de pression 8.

Comme un calcul rigoureux à l'aide de la théorie d'élasticité classique est très évolué et qu'il ne peut quand même pas tenir compte de toutes les données techniques, l'étude sera faite à partir d'un modèle phénoménologique sous une forme simplifiée, comme celui de la figure 6. Dans celui-ci, la cellule de mesure 9 est encastrée d'un seul côté dans un support fixe 10. Il est admis que la force P agit au centre de gravité de la section de la cellule et que la répartition de la force dans la section de la cellule est uniforme.

Ouvrons au préalable une parenthèse pour montrer quelles sont les conditions réelles de répartition dè la force dans la section de la cellule. En rapport avec la figure 5, la cellule peut être montée de manière à tourner librement dans ses supports ou, au contraire, être encastrée de manière fixe. Ceci montre que le montage de la cellule est un facteur important qui ne peut être pris en considération dans la théorie que par des cas limites. L'influence du genre de fixation réel de la cellule ne peut être déterminée qu'expérimentalement.

De même, la force P est appliquée entre les supports le long d'une ligne de longueur déterminée. Il n'est donc pas possible de définir concrètement un point ou une région d'attaque de la force. Ceci est un deuxième facteur d'insécurité dans la théorie, dont l'influence ne peut être déterminée qu'expérimentalement.

De ce qui précède, il résulte que la force ne peut pas être répartie uniformément dans la section de la cellule et qu'il se produit en condition de charge une déformation elliptique de la section, variant selon l'axe longitudinal de la cellule.

Examinons maintenant le cas de la flexion pure à l'aide de la figure 7. Dans celle-ci, une poutre 11 de section circulaire est décomposée en couches superposées 1-4, et 1'-4'. Sous l'influence d'une contrainte de flexion, ces couches se déplacent l'une par rapport à l'autre (exemple : ressort à lames), ce qui produit une force de cisaillement dans la direction Z. Seule la couche neutre est soumise à la flexion pure, les autres couches sont soumises à des efforts de flexion et d'allongement, ces derniers étant produits par la force de cisaillement.

Lorsque la poutre n'est pas chargée, on peut définir à la surface de celle-ci une distance $\overline{AB}$ qui, en condition de charges se déplace en position $\overline{A'B'}$. En rapport avec le comportement des DMS, il est intéressant de connaître la variation de longueur de cette distance. En effet, la distance $\overline{AB}$ est identifiée à la longueur 1 (assimilée à une droite) d'une jauge de contrainte, comme indiqué en figure 8. Dans cette dernière figure, 12 représente la surface latérale de la poutre 11. Les autres paramètres indiqués en figure 8 sont les suivants :

r : rayon de la poutre
λ : distance du point A à l'origine
$\Delta Z$ : projection de 1 (DMS) sur une parallèle à l'axe z
$\Phi$ : angle du rayon au point A par rapport à l'axe x
S : arc (assimilé à une droite) produit par $\Delta\Phi$
$\gamma$ : angle d'inclinaison du DMS par rapport à l'axe z
l : longueur (assimilée à une droite) du DMS non chargé.

A partir de la figure 8, on peut montrer que la longueur $l_B$ du DMS en condition de charge et donnée par la relation

$$l_B = l + \varepsilon m \cdot \cos\gamma\sqrt{(\lambda + l\cos\gamma)^2 + \lambda^2 - 2(\lambda + l\cos\gamma)\lambda \cdot \cos((l/r)\sin\gamma)} \cdot \tag{1}$$

$$\cdot \sin[\Phi + \mathrm{arctg}\,((\lambda + l\cos\gamma)\sin((l/r)\sin\gamma)/((\lambda + l\cos\gamma)\cos((l/r)\sin\gamma) - l))]$$

avec $\varepsilon_m$ : allongement maximal de la couche de surface de la poutre.

Dans le cas où le DMS est disposé axialement, c'est-à-dire parallèlement à l'axe z, $\gamma = 0$ et il vient :

$$I_{B(\gamma=0)} = I(1 + \varepsilon_m \cdot \sin \Phi) \tag{2}$$

Mentionnons ici qu'en pratique l'angle de rotation $\Phi$ de la force radiale autour de la cellule est dans la plupart des cas limité à une valeur largement inférieure à 360°. Cependant, les considérations théoriques et pratiques de la présente description sont valables pour n'importe quel angle de rotation.

Dans le cas où le DMS est disposé radialement, $\gamma = 90°$, de sorte que $I_B = 0$, ce qui était prévisible en accord avec la théorie de la flexion pure.

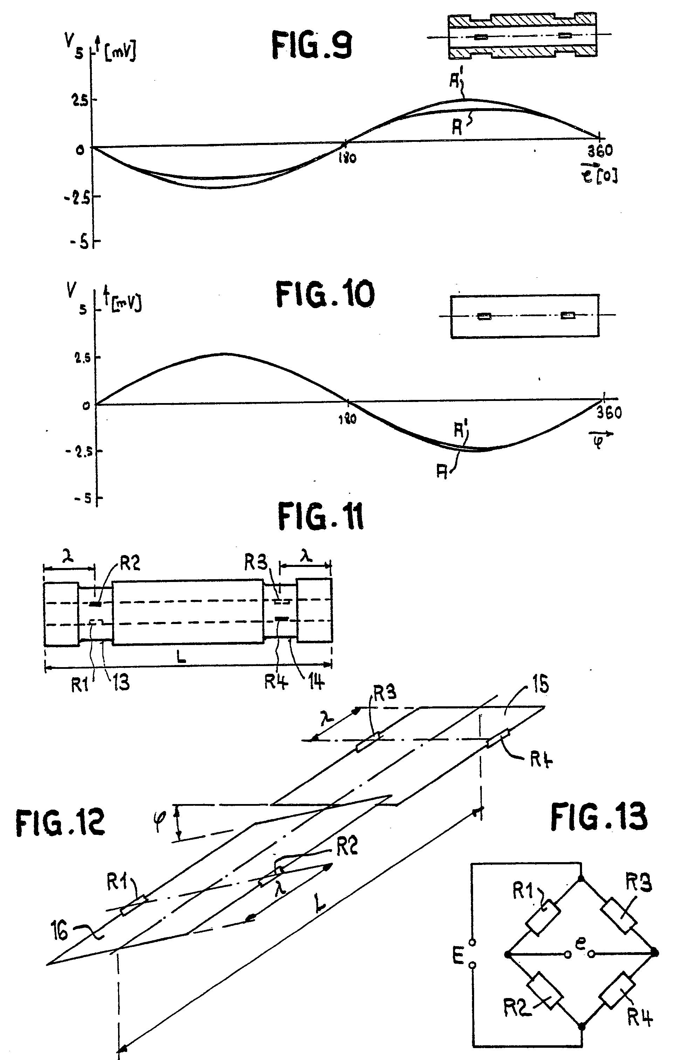

Examinons maintenant les conditions de réalisation de la mesure de la composante de flexion. Un traitement mathématique rigoureux sur la base de la théorie de l'élasticité montre que la composante de flexion ne se comporte pas comme une sinusoïde pure mais qu'elle contient un troisième harmonique dont l'effet se fait plus particulièrement sentir lorsque la cellule de mesure est de forme tubulaire. La figure 9 montre la courbe A de la composante de flexion mesurée avec des DMS disposés axialement à l'intérieur d'une cellule de mesure tubulaire, de section circulaire. L'aplatissement dû au troisième harmonique est clairement visible par comparaison avec la courbe de consigne A'. La figure 10 montre la courbe A de la composante de flexion mesurée avec des DMS disposés axialement à la surface d'une cellule de mesure de section circulaire. Le comportement sinusoïdal du signal de flexion peut être considéré comme bon.

Selon une forme d'exécution de l'invention, le troisième harmonique peut être éliminé par une disposition des capteurs telle qu'indiquée dans les figures 11 et 12. Cette dernière montre que les paires $R_1$, $R_2$ et $R_3$, $R_4$ de capteurs, placés axialement, respectivement dans les zones de concentration de force 13 et 14 de la cellule, sont disposées dans deux plans 15 et 16 inclinés l'un par rapport à l'autre d'un angle $\varphi$. La figure 13 montre le branchement en pont des capteurs $R_1$ à $R_4$.

Le rapport de la tension de sortie e à la tension d'alimentation E d'un tel pont est donné par la relation :

$$e/E = (R_2 \cdot R_3 - R_1 \cdot R_4)/(R_1 + R_2)(R_3 + R_4) \tag{3}$$

En admettant que la sensibilité des jauges de contrainte soit la même, on peut montrer que la relation ci-dessus devient :

$$e/E = 0{,}5[a[\cos \Phi(1 + \cos \varphi) - \sin \Phi \sin \varphi] + C \sin 3 \Phi (1 + \cos 3 \varphi)] \tag{4}$$

relation dans laquelle a et c sont des constantes dépendant de la construction mécanique et de la sensibilité des jauges de contrainte, respectivement pour le signal fondamental et le 3e harmonique de la composante de la force lorsque cette dernière effectue une rotation complète de 360° autour de la cellule de mesure. $\Phi$ est l'angle de rotation.

La relation ci-dessus montre clairement que le 3e harmonique peut être éliminé si l'angle $\varphi$ entre les plans 15 et 16 de la figure 12 vaut 60°, puisque cosinus $(3 \times 60°) = -1$.

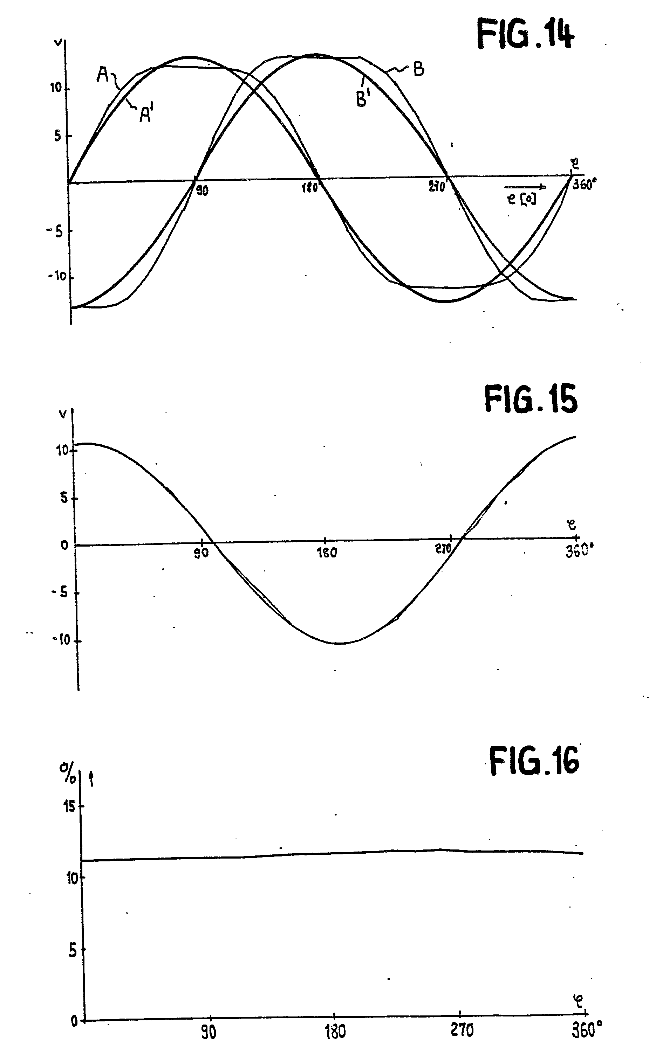

Le succès de cette mesure est prouvé expérimentalement par une comparaison des courbes des figures 14 et 15 montrant respectivement le signal de sortie (représentant la composante de la force) d'une cellule de mesure sans et avec compensation. Alors que les courbes A et B de la figure 14 présentent (par rapport aux courbes A' et B' de consigne) une forte distorsion due à la présence du 3e harmonique, la courbe de la figure 15 est pratiquement sinusoïdale.

Dans le cas de la mesure de la grandeur de la force radiale indépendamment de l'angle d'attaque de celle-ci, la figure 16 montre que l'erreur de mesure ($\pm 1{,}75 \%$) est pratiquement négligeable, alors que, sans compensation du 3e harmonique, cette erreur, indiquée en figure 2 est absolument inadmissible, comme déjà indiqué précédemment.

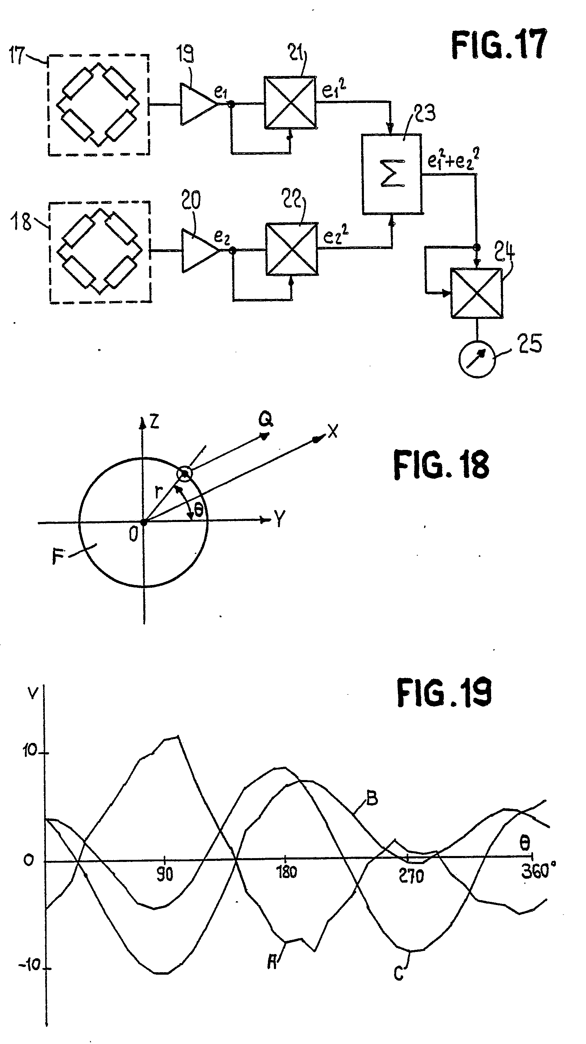

La grandeur de la force radiale sur la cellule peut être mesurée indépendamment de l'angle d'attaque et à l'aide des contraintes de flexion par le circuit de la figure 17. Dans ce cas, il est prévu deux systèmes de capteurs indépendants, décalés l'un par rapport à l'autre de 90°. Les systèmes de mesure 17 et 18 comportant chacun quatre jauges de contrainte disposées comme dans la figure 11 et connectées comme dans la figure 13 sont reliées à un premier (19) et à un second (20) amplificateur délivrant respectivement les signaux de sortie $e_1$ et $e_2$. Une opération de quadrature est effectuée par les circuits 21 et 22 sur chacun de ces signaux et la somme de leurs carrés est réalisée par un sommateur 23 suivi d'un circuit 24 exécutant la racine carrée de la somme délivrée par le sommateur et commandant un dispositif d'affichage 25 indiquant la grandeur de la force radiale P, indépendamment de son angle d'attaque $\Phi$.

Examinons maintenant les effets des contraintes de cisaillement. Il a été vu précédemment que, dans le cas de la poutre selon figure 7, cette dernière n'est pas soumise uniquement à des effets de flexion mais aussi à des efforts de cisaillement.

La figure 18 montre les conditions dans une poutre, dans le cas de contraintes de cisaillement pur. Comme dans le cas de la figure 7, la poutre a une section circulaire de rayon r. F est la surface de la section de la poutre et Q la force de cisaillement agissant le long d'une ligne parallèle à l'axe longitudinal x de la poutre et située dans un plan faisant un angle $\theta$ par rapport à l'axe Y. On sait qu'au bord de la section, les forces de cisaillement sont dirigées selon le pourtour de la section et qu'elles sont nulles dans une direction perpendiculaire. A partir de la figure 18, on calcule que la contrainte·de cisaillement est donnée par la relation :

$$\tau_s = 2/3 \ Q/F(1 - \cos 2\theta) \tag{5}$$

qui montre que, si l'angle d'attaque de la force raidale effectue une rotation de 360°, le signal délivré par les DMS en réponse aux contraintes de cisaillement décrit deux périodes alors que le signal sinusoïdal dû aux contraintes de flexion ne décrit, lui, qu'une période.

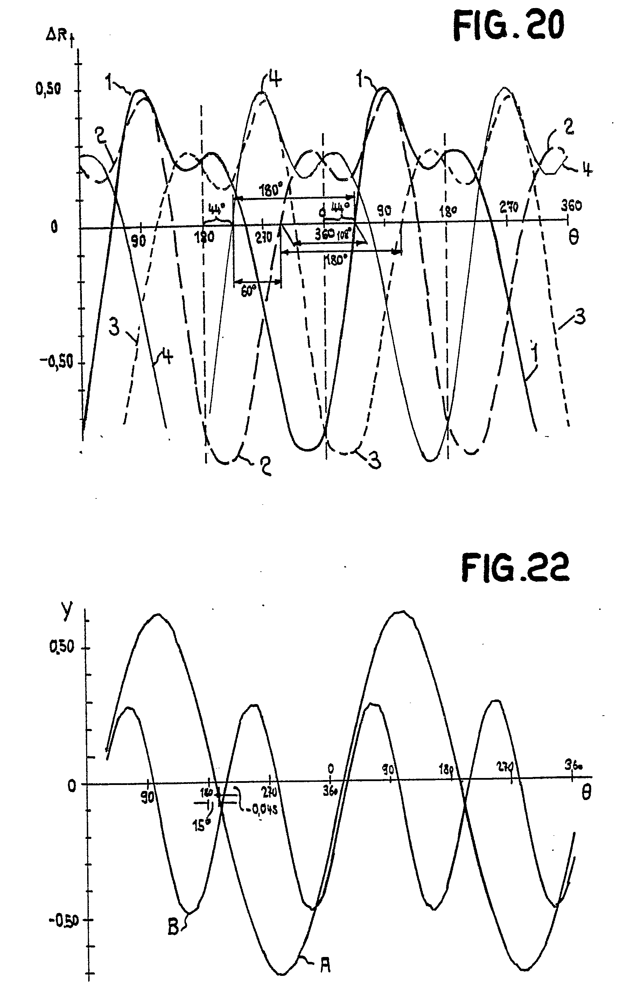

Les figures 19 et 20 montrent des résultats de mesures confirmant la validité des considérations théoriques précédentes.

La figure 19 montre trois courbes A, B et C mesurées sur une même cellule de mesure selon la figure 3, encastrée d'un côté et dans laquelle les capteurs sont collés tangentiellement, perpendiculairement à l'axe longitudinal, dans l'ouverture intérieure de la cellule. Les courbes diffèrent entre elles par la grandeur de la force appliquée et l'angle d'attaque initial de cette force. Il est visible que, conformément à la relation ci-dessus, chaque courbe décrit deux périodes pour une rotation de 360° de l'angle d'attaque θ de la force.

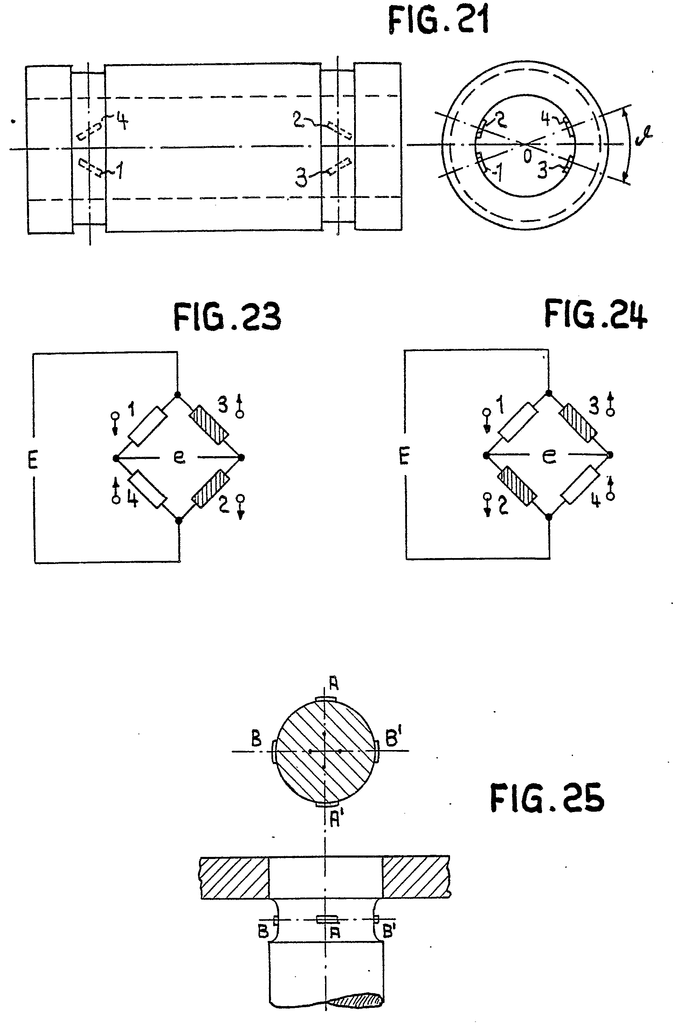

La figure 20 montre les courbes des variations de résistance ΔR des quatres jauges de contrainte 1, 2, 3 et 4 disposées sous un angle de 45° par rapport à l'axe de la cellule de mesure utilisée et représentée dans la figure 21. On reconnaît clairement l'effet de la deuxième harmonique due aux contraintes de cisaillement. La figure 22 montre les composantes de flexion (A) et de cisaillement (B) obtenues par simulation à l'aide d'un ordinateur à partir des variations de résistance mesurées par des capteurs de la cellule de la figure 21. Il est clairement visible que, pour une rotation de 360° de l'angle d'attaque de la force radiale appliquée à la cellule de mesure, la composante de flexion A ne décrit qu'une période alors que la composante de cisaillement B décrit deux périodes, en accord avec les considérations précédentes.

Les figures 23 et 24 montrent les branchements en pont des capteurs de la figure 21 permettant d'éliminer respectivement les effets de la contrainte de cisaillement lors de la mesure de la composante de flexion et les effets de la contrainte de flexion lors de la mesure de la composante de cisaillement.

Il est aussi possible d'utiliser les contraintes de cisaillement pour mesurer la grandeur de la force agissant radialement sur la cellule indépendamment de l'angle d'attaque de cette force.

La figure 25 montre la disposition des jauges de contrainte A, A', B, B' dans une poutre encastrée pour la mesure de la grandeur de la force radiale indépendamment de l'angle d'attaque θ de cette dernière. Les capteurs sont disposés dans la zone de concentration par paires A-A' et B-B', dans deux plans perpendiculaires entre eux et la poutre n'est encastrée que d'un seul côté. Les DMS sont disposés tangentiellement à la surface de la zone de concentration et perpendiculairement à l'axe longitudinal de la poutre. On démontre que les contraintes de cisaillement agissant dans les deux plans perpendiculaires sont données par :

Pour le plan A-A' :
$$\tau_{s1} = (k/2) \ (1 - \cos 2\theta) \tag{6}$$

Pour le plan B-B' :
$$\tau_{s2} = (k/2) \ (1 + \cos 2\theta) \tag{7}$$

où k est une constante de proportionalité.

L'addition des signaux correspondant à $\tau_{s1}$ et $\tau_{s2}$ donne :

$$e = \tau_{s1} + \tau_{s2} = (k/2) \ (1 - \cos 2\theta) + (k/2) \ (1 + \cos 2\theta) = k \tag{8}$$

Le signal résultant est donc indépendant de l'angle d'attaque θ de la force agissant radialement ; il est proportionnel à la grandeur de la force radiale agissant sur la poutre.

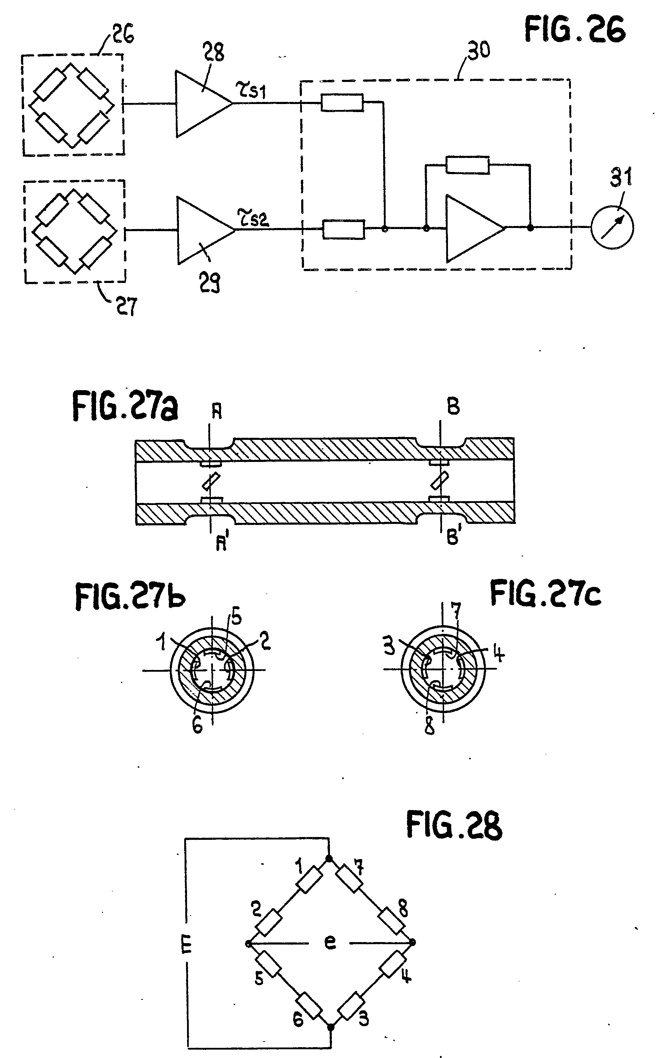

La figure 26 montre le circuit électronique permettant la mesure de la grandeur de la force P agissant radialement indépendamment de l'angle d'attaque de cette force en utilisant les contraintes de cisaillement produites dans la cellule·de mesure. Les DMS A-A' et B-B' sont branchés avec des résistances fixes de manière à former respectivement les ponts 26 et 27 dont les signaux de sortie, après amplification dans les amplificateurs 28 et 29 sont branchés à l'entrée d'un sommateur 30, délivrant à un dispositif d'affichage 31 un signal proportionnel à la force radiale P.

Il a été indiqué plus haut que les composantes de la force P agissant radialement peuvent être mesurées soit à l'aide des contraintes de flexion, soit à l'aide des contraintes de cisaillement. Ce but peut être atteint de deux manières différentes.

1. Par une orientation adéquate des jauges de contrainte :
Orientation axiale pour la mesure à l'aide des contraintes de flexion,
Orientation tangentielle pour la mesure à l'aide des contraintes de cisaillement.

2. Par une orientation inclinée des jauges de contrainte par rapport à l'axe de la cellule de mesure et par un branchement adéquat de ces jauges dans un pont.

2.1. En disposant les capteurs $R_1$-$R_4$ comme indiqué en figure 11, mais avec un certain angle par rapport à l'axe longitudinal de la cellule au lieu de la disposition axiale représentée, la composante de cisaillement se fait sentir par l'apparition d'un 2e harmonique dans les courbes de variations des résistances des capteurs comme indiqué en figure 20. Cependant, en branchant les capteurs selon la configuration de la figure 13 et il est possible de montrer que le signal de sortie du pont correspond à la relation 4 indiquée plus haut, dans laquelle le 3e harmonique 4 indiquée plus haut, dans laquelle le 3e harmonique est éliminé en choisissant $\varphi = 60°$. Ceci montre que la cellule de la figure 11, avec la disposition indiquée des capteurs et le branchement en pont de ces derniers selon le schéma de la figure 13 permet de mesurer la composante de la force radiale P en fonction de l'angle de rotation ‰ ou $\theta$, sans effets pertubateurs produits par les contraintes de cisaillement (2e harmonique) et par le 3e harmonique apparaissant lors de la mesure de cette composante de la force P par les contraintes de flexion. La mesure de la composante de la force P comme indiquée ci-dessus constitue donc une solution particulièrement intéressante au problème que se propose de résoudre l'invention.

2.2. En éliminant les effets des contraintes de flexion par l'utilisation de deux systèmes de quatre capteurs chacun disposés dans les zones de concentration de la cellule, les quatre capteurs de chaque système étant disposés selon deux plans orthogonaux, comme indiqué dans les figures 27a, 27b et 27c. La figure 28 montre le branchement en pont des capteurs de la figure 27. On remarque que les paires de capteurs situés dans un même plan sont connectés en série et que ces paires forment les branches opposées du pont de mesure. On démontre que les branches du pont ainsi formé ne contiennent que des composantes fonction du 2e harmonique, c'est-à-dire ne dépendant que des contraintes de cisaillement, à savoir :

$$R_{(1+2)} = R_{(3+4)} = 2 R(1 + b \sin 2 \theta) \qquad (9)$$

et

$$R_{(5+6)} = R_{(7+8)} = 2 R(1 - b \sin 2 \theta) \qquad (10)$$

A l'aide du circuit de la figure 17, il est alors possible de mesurer, par utilisation des contraintes de cisaillement, la grandeur de la force agissant radialement indépendamment de l'angle d'attaque de cette force.

En résumé, la présente invention apporte des perfectionnement importants aux cellules de mesure de forces agissant radialement, permettant à ces cellules d'être utilisées de manière parfaitement reproductible et avec une précision de mesure largement suffisante pour les besoins de la pratique. Ces perfectionnements sont les suivants :

1. Elimination des effets des contraintes de cisaillement par un branchement adéquat des jauges de contrainte ou par orientation axiale de ces dernières.

2. Elimination du 3e harmonique dans le cas de la mesure utilisant les contraintes de flexion par la disposition des jauges de contrainte dans deux plans inclinés l'un par rapport à l'autre d'un angle de 60°.

3. Possibilité de mesure de la grandeur de la force agissant radialement, indépendamment de son angle d'attaque, par a) orientation tangentielle des jauges de contrainte et utilisation du circuit de mesure selon figure 26 et b) par les mesures indiquées ci-dessus en relation avec les figures 27 et 28 et le circuit de la figure 17 (élimination des effets des contraintes de flexion).

En rapport avec l'utilisation des contraintes de cisaillement, il est expressément rendu attentif que, contrairement à ce qui est divulgué dans l'état de la technique, ces contraintes ne permettent pas de mesurer les composantes de la force axiale en fonction de l'angle de rotation $\theta$, et ceci par le fait qu'elles produisent un signal de sortie décrivant deux périodes pour une seule période de 360° de l'angle $\theta$.

## Revendications

1. Cellule pour la mesure d'une force (P, Q) à effet radial, ladite cellule étant susceptible de produire des signaux de sortie périodiques en fonction d'un déplacement périodique de ladite force (P, Q) autour de ladite cellule, comprenant au moins un système de capteurs ($R_1$-$R_4$ ; 1-4) réagissant aux contraintes produites par ladite force (P, Q) sur ladite cellule lesdits capteurs ($R_1$-$R_4$ ; 1-4) étant disposés symétriquement dans deux plans (15, 16) faisant entre eux un angle déterminé, caractérisée par le fait qu'une partie au moins desdits capteurs ($R_1$-$R_4$ ; 1-4) sont branchés dans un circuit (E, e, $R_1$-$R_4$) permettant d'éliminer dans son signal de sortie des composantes de périodes plus courtes que la période fondamentale dudit déplacement.

2. Cellule selon la revendication 1, caractérisée par le fait qu'elle est de forme tubulaire, de section circulaire, lesdits capteurs ($R_1$-$R_4$) étant montés à la surface intérieure dudit tube dans des zones (2) de concentration de force de diamètre réduit par rapport au diamètre extérieur de ladite cellule.

3. Cellule selon l'une des revendications 1 et 2, caractérisée par le fait que lesdits capteurs ($R_1$-$R_4$) réagissent aux contraintes de flexion exercées par ladite force (P, Q) radiale, lesdits capteurs ($R_1$-$R_4$) étant répartis en deux systèmes formés respectivement d'une première ($R_1$, $R_2$) et d'une seconde ($R_3$, $R_4$)

paire de capteurs, lesdits capteurs d'une paire étant disposés diamétralement dans un plan (16, 15), l'angle entre les plans (16, 15) de la première ($R_1$, $R_2$) et de la seconde ($R_3$, $R_4$) paire étant de 60°.

4. Cellule selon la revendication 3, caractérisée par le fait que lesdits capteurs sont branchés dans un circuit en pont, les branches opposées dudit pont comprenant respectivement un capteur ($R_1$, $R_2$) de la première et un capteur ($R_3$-$R_4$) de la seconde paire, ledit capteur ($R_1$, $R_2$) de la première paire et ledit capteur ($R_3$, $R_4$) de la seconde paire étant disposés dans la cellule symétriquement par rapport à l'axe longitudinal de cette dernière.

5. Cellule selon la revendication 4, caractérisée par le fait que lesdits capteurs ($R_1$-$R_4$) sont orientés parallèlement à l'axe de ladite cellule.

6. Cellule selon la revendication 4, caractérisée par le fait que lesdits capteurs ($R_1$, $R_4$) sont orientés selon une direction faisant un angle déterminé ($\gamma$) avec l'axe de ladite cellule.

7. Cellule selon l'une des revendications 1 et 2, caractérisée par le fait que lesdits capteurs (1-8) réagissent aux contraintes de cisaillement exercées par ladite force radiale, lesdits capteurs étant répartis en un premier (1, 2, 5, 6) et un second (3, 4, 7,8) système de capteurs, lesdits systèmes comprenant chacun une première (1, 2, 3, 4) et une seconde (5, 6, 7, 8) paire de capteurs, les capteurs desdites première et seconde paires étant disposés diamétralement selon deux plans perpendiculaires entre eux.

8. Cellule selon la revendication 7, caractérisée par le fait que lesdits capteurs sont branchés dans un circuit en pont, les branches opposées dudit pont comprenant respectivement le montage en série des capteurs (1, 2 ; 3, 4, resp. 5, 6 ; 7, 8) d'une desdites paires de capteurs de chaque système, lesdites paires de capteurs de chaque système (1, 2, 5, 6 ; 3, 4, 7, 8) étant situées dans un même plan.

9. Cellule selon la revendication 8, caractérisée par le fait que lesdits capteurs sont orientés tangentiellement, dans une direction perpendiculaire à l'axe de ladite cellule.

10. Cellule selon la revendication 8, caractérisée par le fait que lesdits capteurs sont orientés selon une direction faisant un angle déterminé ($\gamma$) avec l'axe de ladite cellule.

## Claims

1. Radial force (P, Q) measuring cell capable of producing periodic output signals in response to a periodic displacement of said force (P, Q) around said cell, comprising at least a system of transducers ($R_1$-$R_4$ ; 1-4) responding to strains produced by said force (P, Q) onto said cell, said transducers ($R_1$-$R_4$ ; 1-4) being symetrically disposed into two planes (15, 16) enclosing a determined angle between themselves, characterized in that at least part of said transducers ($R_1$-$R_4$ ; 1-4) are connected into a circuit (E, e, $R_1$-$R_4$) capable of eliminating in its output signal components having shorter periods than the fundamental period of said displacement.

2. Cell according to claim 1, characterized in that it is of tubular configuration with a circular cross-section, said transducers ($R_1$-$R_4$) being mounted on the inner surface of said tube into force concentration regions (2) having a smaller diameter than the outer diameter of the cell.

3. Cell according to one of the claims 1 and 2, characterized in that said transducers ($R_1$-$R_4$) respond to the bending strains produced by said radial force (P, Q), said transducers ($R_1$-$R_4$) being distributed into two systems comprising respectively a first ($R_1$, $R_2$) and a second ($R_3$, $R_4$) pair of transducers, the transducers of each pair being disposed diametrically into a plane (16, 15), the angle enclosed between said planes (16, 15) of the first ($R_1$, $R_2$) and the second ($R_3$, $R_4$) pair being 60°.

4. Cell according to claim 3, characterized in that said transducers are connected into a bridge circuit, the opposite branches of said bridge comprising respectively a transducer ($R_1$, $R_2$) of the first and a transducer ($R_3$, $R_4$) of the second pair, said transducer ($R_1$, $R_2$) of the first pair and said tranducer ($R_3$, $R_4$) of the second pair being disposed in the cell symmetrically with respect to the longitudinal axis of the cell.

5. Cell according to claim 4, characterized in that said transducers ($R_1$-$R_4$) are oriented in a direction parallel to the axis of the cell.

6. Cell according to claim 4, characterized in that said transducers ($R_1$-$R_4$) are oriented in a direction making a determined angle ($\gamma$) with the axis of said cell.

7. Cell according to one of the claims 1 and 2, characterized in that said transducers (1-8) respond to the shearing strains produced by said radial force, said transducers being distributed into a first (1, 2, 5, 6) and a second (3, 4, 7, 8) system of transducers, said systems comprising each a first (1, 2 ; 3, 4) and a second (5, 6 ; 7, 8) pair of transducers, the transducers of said first and second pairs being disposed diametrically into two planes perpendicular to each other.

8. Cell according to claim 7, characterized in that said transducers are mounted into a bridge circuit, the opposite branches of said bridge comprising respectively the series connection of the transducers (1, 2 ; 3, 4, resp. 5, 6 ; 7, 8) of one of said pairs of transducers of each system, said pairs of transducers of each system (1, 2, 5, 6 ; 3, 4, 7, 8) being located into a common plane.

9. Cell according to claim 8, characterized in that said transducers are oriented tangentially in a direction perpendicular to the axis of the cell.

10. Cell according to claim 8, characterized in that said transducers are oriented in a direction making a determined angle ($\gamma$) with the axis of the cell.

8

## Ansprüche

1. Radialkraft-Messzelle für die Messung einer radial wirkenden Kraft (P, Q), wobei die Messzelle periodische Ausgangssignale in Funktion einer periodischen Verschiebung der gennaten Kraft (P, Q) um die Messzelle erzeugen kann, welche Messzelle mindestens ein System von Wandlern ($R_1$-$R_4$ ; 1-4) aufweist, welche auf die durch die Kraft (P, Q) auf die Messzelle erzeugten Beanspruchungen ansprechen, wobei die Wandler ($R_1$-$R_4$ ; 1-4) symmetrisch in zwei einen bestimmten Winkel zueinander bildenden Ebenen (15, 16) angeordnet sind, dadurch gekennzeichnet, dass mindestens in Teil der genannten Wandler ($R_1$-$R_4$ ; 1-4) in einer Schaltung (E, e, $R_1$-$R_4$) geschaltet sind, welche Komponenten mit einer kürzeren Periode als die Grundperiode der genannten Verschiebung in ihres Ausgangssignal ausscheiden kann.

2. Messzelle nach Anspruch 1, dadurch gekennzeichnet, dass sie röhrenförmig mit einem kreisförmigen Querschnitt ausgeführt ist, wobei die Wandler ($R_1$-$R_4$) an die innere Wandung des Rohres in kraftkonzentrierenden Bereichen (2) die einen reduzierten Durchmesser im Vergleich mit dem äusseren Durchmesser der Messzelle aufweisen, angebracht sind.

3. Messzelle nach einem der Ansprüche 1 und 2, dadurch gekennzeichnet, dass die Wandler ($R_1$-$R_4$) auf die durch die genannte radiale Kraft (P, Q) erzeugten Beigebeanspruchungen ansprechen, wobei die Wandler ($R_1$-$R_4$) in zwei Systeme verteilt sind, die ein erstes ($R_1$, $R_2$) bzw. ein zweites ($R_3$, $R_4$) Paar von Wandlern aufweisen, wobei die Wandler eines Paares diametral in einer Ebene (16, 15) angeordnet sind, und dass der Winkel zwischen den Ebenen (16, 15) des ersten ($R_1$, $R_2$) und des zweiten ($R_3$, $R_4$) Paares 60° beträgt.

4. Messzelle nach Anspruch 3, dadurch gekennzeichnet, dass die Wandler in eine Brückenschaltung geschaltet sind, wobei die entgegengesetzten Brückenzweige einen Wandler ($R_1$, $R_2$) des ersten bzw. einen Wandler ($R_3$, $R_4$) des zweiten Paares aufweisen, und wobei der Wandler ($R_1$, $R_2$) des ersten Paares und der Wandler ($R_3$, $R_4$) des zweiten Paares in der Messzelle symmetrisch in Bezug auf die longitudinale Achse der Messzelle angeordnet sind.

5. Messzelle nach Anspruch 4, dadurch gekennzeichnet, dass die Wandler ($R_1$-$R_4$) parallel zur Achse der Messzelle gerichtet sind.

6. Messzelle nach Anspruch 4, dadurch gekennzeichnet, dass die Wandler in einer Richtung orientiert sind, die einen bestimmten Winkel ($\gamma$) zur Achse der Messzelle bildet.

7. Messzelle nach einem der Ansprüche 1 und 2, dadurch gekennzeichnet, dass die Wandler (1-8) auf die durch die genannte radiale Kraft erzeugten Schubbeanspruchungen ansprechen, wobei die Wandler in ein erstes (1, 2, 5, 6) und ein zweites (3, 4, 7, 8) System von Wandlern verteilt sind, wobei jedes System ein erstes (1, 2 ; 3, 4) und ein zweites (5, 6 ; 7, 8) Paar von Wandlern aufweist, und wobei die Wandler des ersten und des zweiten Paares diametral in zwei Ebenen senkrecht zueinander angeordnet sind.

8. Messzelle nach Anspruch 7, dadurch gekennzeichnet, dass die Wandler in eine Brückenschaltung geschaltet sind, wobei die entgegengesetzten Brückenzweige die Serieschaltung der Wandler (1, 2 ; 3, 4 bzw. 5, 6 ; 7, 8) von einem der genannten Wandlerpaare jedes Systems aufweisen, und wobei die Wandlerpaare jedes Systems (1, 2, 5, 6 ; 3, 4, 7, 8) in einer gemeinsamen Ebene liegen.

9. Messzelle nach Anspruch 8, dadurch gekennzeichnet, dass die Wandler tangential in einer Richtung senkrecht zur Achse der Messzelle gerichtet sind.

10. Messzelle nach Anspruch 8, dadurch gekennzeichnet, dass die Wandler in einer Richtung orientiert sind, die einen bestimmten Winkel ($\gamma$) zur Achse der Messzelle bildet.

FIG.1

FIG.2

FIG.3

**FIG.4**

**FIG.6**

**FIG.5**

**FIG.7**

**FIG.8**

2

# FIG.9

# FIG.10

# FIG.11

# FIG.12

# FIG.13

**FIG.14**

**FIG.15**

**FIG.16**

**FIG.17**

$e_1$  $e_1^2$

$e_1^2 + e_2^2$

$e_2$  $e_2^2$

**FIG.18**

**FIG.19**

# FIG.20

# FIG.22

FIG.21

FIG.23

FIG.24

FIG.25

**FIG.26**

**FIG.27a**

**FIG.27b**      **FIG.27c**

**FIG.28**